# EUROPÄISCHE PATENTANMELDUNG

(11) **EP 0 822 344 A2**
(43) Veröffentlichungstag der Anmeldung: **04.02.1998**
(21) Anmeldenummer: 97112368.2
(22) Anmeldetag: 18.07.1997
(51) Int. Cl.: F15B 21/08, F15B 13/08

(54) **Pneumatischer Regelantrieb sowie Verblockventil für einen derartigen pneumatischen Regelantrieb**

(30) Priorität: 29.07.1996 DE 29613138 U
(71) Anmelder: SIEMENS AKTIENGESELLSCHAFT, 80333 München (DE)
(72) Erfinder: Heer, Klaus-Peter, 76863 Herxheim (DE)

(57) **Zusammenfassung**

Es ist ein Verblockventil vorgesehen, das gemeinsam mit einem Stellungsregler des pneumatischen Antriebs (11) durch dieselbe Hilfsenergie versorgbar ist und das bei vorhandener Hilfsenergie den Stellungsregler pneumatisch mit einer Antriebskammer (15) des Antriebs (11) verbindet und bei fehlender Hilfsenergie die Antriebskammer (15) verschließt. Vorteilhaft sind am Stellungsregler getrennte Eingänge für Hilfsenergie und Sollwert vorgesehen und ein 4- bis 20 mA-Signal wird beiden Eingängen in Reihenschaltung zugeführt. Das Verblockventil (19) wird parallel zu dem Eingang für Hilfsenergie geschaltet.

Die Erfindung wird angewandt bei pneumatischen Regelantrieben.

## Beschreibung

Die Erfindung betrifft einen pneumatischen Regelantrieb nach dem Oberbegriff des Anspruchs 1 sowie ein Verblockventil für einen derartigen Regelantrieb.

Aus dem Siemens-Katalog MP31, 1996, Seiten 8/1 bis 8/8, ist der elektropneumatische Stellungsregler SIPART PS bekannt, der eingesetzt wird, um an pneumatischen Schub- oder Schwenkantrieben die Position eines angeschlossenen Stellgliedes, beispielsweise eine Ventil- oder Klappenstellung, zu regeln. Von einem Prozeßregler- oder -leitsystem wird dem Stellungsregler über eine Schnittstelle, beispielsweise ein analoger 4- bis 20 mA-Eingang, ein Sollwert vorgegeben, und der Stellungsregler erzwingt am Antrieb dann eine diesem Sollwert entsprechende Stellung. Der Druck in einer Antriebskammer oder bei doppeltwirkenden Antrieben in beiden Antriebskammern wird so lange verändert, bis die vorgegebene Position des Stellglieds erreicht ist. Dazu wird die aktuelle Position mit einem Weggeber, beispielsweise einem Leitplastik-Potentiometer, erfaßt und ein mit dem Weggeber erzeugtes Istwertsignal zusammen mit dem Sollwert einem Mikrocontroller zugeführt. Dieser vergleicht beide Signale, bildet eine Regelabweichung und berechnet unter Berücksichtigung der Dynamik des pneumatischen Antriebs die erforderlichen Schaltreaktionen nachgeschalteter pneumatischer Ventile. Ein Ventil liegt im Zuluftzweig für eine Erhöhung des Luftdrucks in der Kammer, ein anderes Ventil im Abluftzweig und öffnet, wenn die Kammer entlüftet werden soll.

Der Stellungsregler SIPART PS verfügt über zwei separat zugängliche Eingänge für Hilfsenergie und Sollwert eines 4- bis 20 mA-Signals. In einer Zweileiterschaltung wird das 4- bis 20 mA-Signal auf den positiven Anschluß des Hilfsenergieeingangs und der Rückleiter auf den negativen Eingang des Sollwerts geführt. Damit der Stromkreis geschlossen ist, wird zwischen den negativen Eingang für Hilfsenergie und den positiven Eingang für den Sollwert eine Brücke gelegt. Auf diese Weise ist das 4- bis 20 mA-Signal quasi durch eine Reihenschaltung beiden Eingängen zugeführt.

Pneumatische Regelantriebe fahren bei Ausfall der elektrischen Hilfsenergie eine nach Sicherheitsgesichtspunkten ausgewählte Endlage ihres Verfahrweges an, die vom pneumatischen Stellungsregler und dessen Verschaltung mit dem Antrieb vorgegeben wird. Dies ist bei einfach wirkenden Antrieben in der Regel die Endlage, die durch Entlüftung der Antriebskammer entsprechend der Richtung der Federkraft erreicht wird, bei doppeltwirkenden Antrieben entweder die 0 %- oder 100 %-Stellung, je nachdem, welche der Antriebskammern bei Ausfall der Hilfsenergie durch die Piezoventile belüftet oder entlüftet wird. Es sind keine Maßnahmen dazu beschrieben, daß der pneumatische Regelantrieb bei Ausfall der elektrischen Hilfsenergie seine letzte Stellung beibehält.

Der Erfindung liegt die Aufgabe zugrunde, einen pneumatischen Regelantrieb zu schaffen, der bei Ausfall der elektrischen Hilfsenergie seine letzte Stellung beibehält, ohne daß hierzu zusätzlich zur Hilfsenergieversorgung eines elektropneumatischen Stellungsreglers eine weitere Hilfsenergie erforderlich wäre, sowie ein Verblockventil für einen derartigen Regelantrieb bereitzustellen.

Zur Lösung dieser Aufgabe weist der neue pneumatische Regelantrieb die im kennzeichnenden Teil des Anspruchs 1 bzw. das neue Verblockventil die im kennzeichnenden Teil des Anspruchs 5 genannten Merkmale auf. In den abhängigen Ansprüchen sind vorteilhafte Weiterbildungen des pneumatischen Regelantriebs beschrieben.

Die Verblockfunktion wird mit Hilfe eines zusätzlichen Ventils erreicht, das in die pneumatische Leitung von dem Stellungsregler zur Antriebskammer oder bei doppeltwirkenden Antrieben in die pneumatischen Leitungen zu beiden Antriebskammern geschaltet wird und bei Ausfall der Hilfsenergie die Ent- oder Belüftung verhindert und somit den Antrieb in der letzten Stellung hält. Da ein Verblockventil verwendet wird, das aufgrund seiner konstruktiven Auslegung bei Betätigung den Stellungsregler pneumatisch mit der oder den Antriebskammern verbindet und bei fehlender Hilfsenergie der oder die Antriebskammern verschließt, ist in vorteilhafter Weise eine zusätzliche Elektronikschaltung zur Erzeugung eines Ansteuersignals und eine zusätzliche Hilfsenergie für das Verblockventil nicht erforderlich. Bei Verwendung eines Piezoelements zur Vorsteuerung des Verblockventils wird die Hilfsenergieversorgung des Stellungsreglers durch das Verblockventil kaum zusätzlich belastet. Wenn das Verblockventil dem Hilfsenergieeingang eines Stellungsreglers parallelgeschaltet wird, fließt der vollständige Strom des 4- bis 20 mA-Signals über den Soliwerteingang und der Sollwert wird durch das Verblockventil nicht verfälscht. In vorteilhafter Weise ist eine Verschlauchung oder Verrohrung des Verblockventils überflüssig, wenn an dem pneumatischen Antrieb ein Flansch vorgesehen wird, der zumindest zwei Öffnungen zur pneumatischen Verbindung einer Antriebskammer mit dem Stellungsregler aufweist. An diesen Flansch kann das Verblockventil direkt angeschlossen und befestigt werden.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: ein Blockschaltbild eines Regelventils und
- Figur 2: eine Anschlußseite eines Flansches zur Befestigung eines Verblockventils.

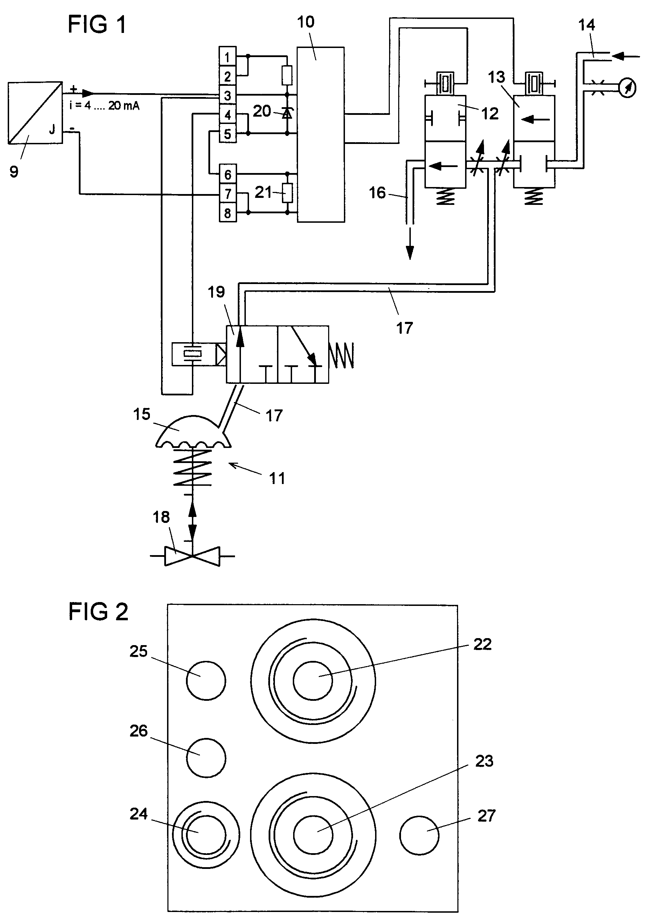

In Figur 1 sind Anschlußklemmen eines Stellungsreglers, die zum Anschluß an eine 4- bis 20 mA-Schnittstelle 9 eines in der Zeichnung nicht dargestellten Prozeßleitsystems dienen, mit Bezugszeichen 1 bis 8 versehen. In der gezeigten Zweileiterschaltung wird der negative Hilfsenergieeingang am Anschluß 5 zum positiven Sollwerteingang an der Anschlußklemme 6 gebrückt sowie Hin- und Rückleiter der 4- bis 20 mA-Schnittstelle an den Klemmen 3 bzw. 7 angeschlossen. Die Anschlußklemmen 3 und 5 bilden einen Eingang für die Hilfsenergie und damit zur Stromversorgung des elektropneumatischen Stellungsreglers. Aus dem über die Anschlußklemmen 6 und 7 fließenden Strom wird der Sollwert abgeleitet, der dem Stellungsregler durch das Prozeßleitsystem vorgegeben wird. Durch eine Ansteuereinrichtung 10 des Stellungsreglers werden in Abhängigkeit von der aktuellen Stellung eines pneumatischen Antriebs 11 Piezoventile 12 und 13 geöffnet oder geschlossen, um Druckluft von einem Versorgungsnetz 14 einer Antriebskammer 15 zuzuleiten oder die Luft aus der Antriebskammer 15 über eine Ableitung 16 ins Freie abzulassen, bis der Sollwert erreicht ist. Der zur Erfassung der aktuellen Antriebsstellung erforderliche Stellungsmelder ist in der Zeichnung der Übersichtlichkeit wegen nicht dargestellt. In eine pneumatische Verbindungsleitung 17 zwischen dem pneumatischen Stellungsregler und dem pneumatischen Antrieb eines Ventils 18 ist ein Verblockventil 19 mit piezoelektrischem Vorsteuerelement zwischengeschaltet. Die Piezoventile 12 und 13 können beispielsweise als 3/3-Wegeventil, das Piezoventil 19 als 3/2-Wegeventil ausgeführt werden. Bei doppeltwirkenden Antrieben wird für die Verblockfunktion anstatt des 3/2-Wegeventils 19 ein 5/2-Wegeventil verwendet, das ebenfalls mit einem Piezoelement zur Vorsteuerung versehen ist.

Solange die elektrische Hilfsenergie zum Betrieb des Regelventils ausreicht und zumindest ca. 3,5 mA über die Anschlußklemmen 3 und 5 des Hilfsenergieeingangs fließen, liegt an einer Zenerdiode 20 eine Spannung von mehr als 6 V an. Die Spannung zwischen den Anschlüssen des Piezoelements zur Vorsteuerung des Verblockventils 19 liegt dann über dessen Schaltspannung von 5 V, so daß das Verblockventil 19 die pneumatische Verbindung zwischen Stellungsregler und Antriebskammer 15 herstellt und der Antrieb be- oder entlüftet werden kann. Fällt die elektrische Hilfsenergie aus, sinkt auch die Spannung zwischen den Anschlußklemmen 3 und 4 unter die Schaltspannung, das Verblockventil unterbricht die pneumatische Verbindung 17 und der Antrieb behält die letzte Position bei, bis die Hilfsenergie wiederkehrt.

Der Anschluß des Piezoelements des Verblockventils 19 parallel zum Hilfsenergieeingang des Stellungsreglers hat den Vorteil, daß durch das Hinzufügen des Verblockventils 19 der Sollwert nicht beeinflußt wird. Weiterhin wird das vollständige 4- bis 20 mA-Signal über einen Meßwiderstand 21 im Sollwerteingang des Stellungsreglers geführt, an welchem ein dem Sollwert entsprechendes Spannungssignal unverändert abgegriffen werden kann. Der über das Piezoelement fließende Betriebsstrom beträgt ca. 50 µA und beeinträchtigt daher die Funktion des Stellungsreglers nicht. Durch die gezeigte Schaltfunktion des Verblockventils 19 und durch die gewählte Art des elektrischen Anschlusses wird in vorteilhafter Weise eine Verblockfunktion des Antriebs erreicht, ohne daß hierzu eine zusätzliche Hilfsenergie, eine zusätzliche Elektronikschaltung zum Erzeugen eines Binärsignals oder zusätzliche Leitungen von einer Warte ins Feld erforderlich wären.

Eine leichte Montage eines Verblockventils an einem pneumatischen Antrieb wird durch einen Flansch erreicht, dessen prinzipielles Anschlußbild in Figur 2 dargestellt ist. Auf der Antriebsseite führt eine Leitung von einer Öffnung 22 zum Arbeitsraum des pneumatischen Antriebs, eine Öffnung 23 zum Federraum und eine Öffnung 24 zum Ausgang des elektropneumatischen Stellungsreglers. Gewindebohrungen 25, 26 und 27 dienen zur Befestigung des Verblockventils am Flansch. Dieser Flansch ist sowohl zum Anschluß eines Schnellentlüftungsventils als auch eines Verblockventils vorteilhaft, da jegliche Verrohrung oder Verschlauchung entfällt. Ist ausreichende Hilfsenergie vorhanden, so wird durch ein angeschlossenes Verblockventil die Öffnung 22 mit der Öffnung 24 pneumatisch verbunden. Fällt die elektrische Hilfsenergie aus, so werden die beiden Öffnungen 22 und 24 durch das Verblockventil verschlossen, so daß keine Luft aus dem mit der Öffnung 22 verbundenen Arbeitsraum des pneumatischen Antriebs entweichen kann. Dadurch behält der Antrieb seine zuletzt eingenommene Stellung auch bei Ausfall der Hilfsenergie bei.

## Patentansprüche

1. Pneumatischer Regelantrieb
- mit einem pneumatischen Antrieb und
- mit einem elektropneumatischen Stellungsregler, der über eine Kommunikationsschnittstelle mit einer elektrischen Hilfsenergie und einem Sollwert versorgbar ist,
**dadurch gekennzeichnet,**
- daß ein Verblockventil (19) vorgesehen ist, das gemeinsam mit dem Stellungsregler durch dieselbe Hilfsenergie versorgbar ist und das bei vorhandener Hilfsenergie den Stellungsregler pneumatisch mit einer Antriebskammer (15) des Antriebs (11) verbindet und bei fehlender Hilfsenergie die Antriebskammer (15) verschließt.

2. Pneumatischer Regelantrieb nach Anspruch 1, **dadurch gekennzeichnet,**
- daß das Verblockventil (19) ein Piezoventil ist.

3. Pneumatischer Regelantrieb nach Anspruch 2, **dadurch gekennzeichnet,**
- daß der Stellungsregler über eine 4- bis 20 mA-Schnittstelle mit Hilfsenergie versorgbar ist, wobei getrennte Eingänge für Hilfsenergie und Sollwert vorgesehen sind und das 4- bis 20 mA-Signal durch eine Reihenschaltung beiden Eingängen zuführbar ist, und
- daß das Piezoventil (19) parallel zu dem Eingang für Hilfsenergie geschaltet ist.

4. Pneumatischer Regelantrieb nach einem der vorhergehenden Ansprüche, **dadurch gekennzeichnet,**
- daß ein Flansch zum Anschluß des Verblockventils vorgesehen ist, der zumindest zwei Öffnungen (22, 24) zur pneumatischen Verbindung einer Antriebskammer (15) des pneumatischen Antriebs (11) mit dem Stellungsregler aufweist.

5. Verblockventil für einen pneumatischen Regelantrieb nach Anspruch 4, **dadurch gekennzeichnet,**
- daß es an einem Flansch, der zumindest zwei Öffnungen (22, 24) zur pneumatischen Verbindung einer Antriebskammer (15) des pneumatischen Antriebs (11) mit einem Stellungsregler aufweist, anbringbar ist und zu diesem korrespondierende pneumatische Anschlüsse aufweist,
- daß ein Piezoelement zur Vorsteuerung dient,
- daß, wenn keine Energie den elektrischen Anschlüssen des Piezoelements zugeführt wird, zumindest die Öffnung (22) zur Antriebskammer (15) verschlossen wird und
- daß es, wenn eine Energie zu seiner Betätigung zugeführt wird, die Öffnung (22) zur Antriebskammer (15) mit der Öffnung (24) zum Stellungsregler pneumatisch verbindet.
